(19) **Europäisches Patentamt / European Patent Office / Office européen des brevets**

(11) **EP 2 261 704 A1**

(12) **EUROPEAN PATENT APPLICATION**
published in accordance with Art. 153(4) EPC

(43) Date of publication:
**15.12.2010 Bulletin 2010/50**

(21) Application number: **09727075.5**

(22) Date of filing: **02.04.2009**

(51) Int Cl.:
*G02B 5/30* (2006.01)    *G02F 1/1335* (2006.01)

(86) International application number:
**PCT/JP2009/056902**

(87) International publication number:
**WO 2009/123290 (08.10.2009 Gazette 2009/41)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **03.04.2008 JP 2008097405**

(71) Applicant: **Asahi Glass Company, Limited**
**Chiyoda-ku**
**Tokyo 100-8405 (JP)**

(72) Inventors:
• **KAIDA, Yuriko**
**Tokyo 100-8405 (JP)**

• **SAKAMOTO, Hiroshi**
**Tokyo 100-8405 (JP)**
• **MIYAGI, Takahira**
**Tokyo 100-8405 (JP)**
• **SAKURAI, Hiromi**
**Tokyo 100-8405 (JP)**
• **IKEDA, Yasuhiro**
**Tokyo 100-8405 (JP)**
• **SHIDOJI, Eiji**
**Tokyo 100-8405 (JP)**
• **KAWAMOTO, Masako**
**Tokyo 100-8405 (JP)**

(74) Representative: **Müller-Boré & Partner**
**Patentanwälte**
**Grafinger Straße 2**
**81671 München (DE)**

(54) **WIRE GRID POLARIZER AND METHOD FOR MANUFACTURING THE SAME**

(57) Provided is a wire grid polarizer showing a high degree of polarization, a high p-polarized light transmittance and a high s-polarized light reflectivity for light incident from a front surface and showing a low s-polarized light reflectivity for light incident from its rear surface, in the visible light region, and a process for producing such a polarizer.

A wire grid polarizer comprising a light-transmitting substrate having a surface on which a plurality of ridges are formed so as to be parallel with one another at a predetermined pitch (Pp), and fine metallic wires made of a metal or a metal compound, each covering three faces of each ridge of the light-transmitting substrate, that are a top face of the ridge and two side faces that are a first side face and a second side face, extending in the longitudinal direction of the ridge;
wherein the wire grid polarizer satisfies the following conditions (a) to (c):
(a) the thickness Dm1 of each fine metallic wire covering the first side face of each ridge and the thickness Dm2 of the fine metallic wire covering the second side face of the ridge, satisfy the following formula (1-1) and the following formula (1-2), respectively:

$$0\ \text{nm} < Dm1 \leq 20\ \text{nm} \quad \dots \quad (1\text{-}1),$$

and

$$0\ \text{nm} < Dm2 \leq 20\ \text{nm} \quad \dots \quad (1\text{-}2);$$

(b) the thickness Hm of the fine metallic wire covering the top face of the ridge and the height Hp of the ridge satisfy the following formula (2):

$$40\ \text{nm} \leq Hm \leq 0.5 \times Hp \quad \dots \quad (2);$$

and
(c) Dm1, Dm2, Pp and the width Dp of each ridge satisfy the following formula (3):

$$Dm1 + Dm2 \leq 0.4 \times (Pp - Dp) \quad (3).$$

EP 2 261 704 A1

Fig. 1

**Description**

TECHNICAL FIELD

The present invention relates to a wire-grid polarizer and a process for producing the polarizer.

BACKGROUND ART

As polarizers (they are also referred to as polarizing separation elements) used for image display devices such as liquid crystal display devices, projection TVs or front projectors, and showing polarization separation ability in the visible light region, there are absorption polarizers and reflection polarizers.

An absorption polarizer is, for example, a polarizer having a dichroic dye such as iodine aligned in a resin film. However, since such an absorption polarizer absorbs one of polarized light, its light-utilization efficiency is low.

On the other hand, in a reflection polarizer, reflected light not incident into the polarizer is incident again into the polarizer, whereby the light-utilization efficiency can be improved. For this reason, a demand for such a reflection polarizer for the purpose of achieving high intensity of e.g. liquid crystal display devices, is increased.

As a reflection polarizer, there are a linear polarizer constituted by a lamination of birefringent resins, a circular polarizer constituted by a cholesteric liquid crystal and a wire-grid polarizer.

However, such linear polarizers and circular polarizers have low polarization separation ability. For this reason, a wire-grid polarizer showing high polarization separation ability is attentioned.

A wire-grid polarizer has a construction comprising a light-transmitting substrate having a plurality of parallel fine metallic wires arranged on the substrate. When the pitch of the fine metallic wires is sufficiently shorter than the wavelength of incident light, in the incident light, a component (i.e. p polarized light) having an electric field vector perpendicular to the fine metallic wires is transmitted, but a component (i.e. s polarized light) having an electric field vector parallel with the fine metallic wires is reflected.

As wire-grid polarizers showing polarization separation ability in visible light region, the following types are known.

(1) A wire grid polarizer comprising a light-transmitting substrate on which fine metallic wires are formed at a predetermined pitch (Patent Document 1).
(2) A wire grid polarizer comprising a light-transmitting substrate having a surface on which a plurality of ridges are formed at a predetermined pitch and a top face and side faces of such a ridge is covered with a film of material of metal or a metal compound to form a fine metal wire (Patent Document 2).

However, in the wire grid polarizers of (1) and (2), reflection of S-polarized light occurs also at a surface (hereinafter it is also referred to as rear surface) opposite to a surface (hereinafter it is also referred to as front surface) on which the fine metallic wires are formed. On the rear side of the wire grid polarizer, a liquid crystal panel is disposed in a case of liquid crystal display device, and accordingly, when S-polarized light reflected at the rear surface of the wire grid polarizer is incident into the liquid crystal panel, the contrast of image displayed on the liquid crystal panel decreases.

PRIOR ART

PATENT DOCUMENTS

Patent Document 1:    JP-A-2005-070456
Patent Document 2:    JP-A-2006-003447

DISCLOSURE OF THE INVENTION

PROBLEMS TO BE SOLVED BY THE INVENTION

The present invention provides a wire grid polarizer and its production process, which shows a high degree of polarization, a high p-polarized light transmittance and a high s-polarized light reflectivity for light incident from the front surface, and which shows a low s-polarized light reflectivity for light incident from the rear surface, in the visible light region.

MEANS FOR SOLVING THE PROBLEMS

The present invention has the following gist.

(1) A wire grid polarizer comprising a light-transmitting substrate having a surface on which a plurality of ridges are formed so as to be parallel with one another at a predetermined pitch (Pp), and fine metallic wires made of a metal or a metal compound, each covering three faces of each ridge of the light-transmitting substrate, that are a top face of the ridge and two side faces that are a first side face and a second side face, extending in the longitudinal direction of the ridge;

wherein the wire grid polarizer satisfies the following conditions (a) to (c):

(a) the thickness Dm1 of each fine metallic wire covering the first side face of each ridge and the thickness Dm2 of the fine metallic wire covering the second side face of the ridge, satisfy the following formula (1-1) and the following formula (1-2), respectively:

$$0 \text{ nm} < Dm1 \leq 20 \text{ nm} \quad \ldots \quad (1\text{-}1),$$

and

$$0 \text{ nm} < Dm2 \leq 20 \text{ nm} \quad \ldots \quad (1\text{-}2);$$

(b) the thickness Hm of the fine metallic wire covering the top face of the ridge and the height Hp of the ridge satisfy the following formula (2):

$$40 \text{ nm} \leq Hm \leq 0.5 \times Hp \quad \ldots \quad (2);$$

and
(c) Dm1, Dm2, Pp and the width Dp of the ridge satisfy the following formula (3):

$$Dm1 + Dm2 \leq 0.4 \times (Pp - Dp) \quad \ldots \quad (3).$$

(2) The wire grid polarizer according to the above (1), which further satisfies the following condition (d):

(d) the maximum width Dm of the fine metallic wire covering the top face of the ridge, Pp and the width Dp of the ridge satisfy the following formula (4):

$$Dm - Dp \leq 0.4 \times (Pb - Dp) \quad \ldots \quad (4).$$

(3) The wire grid polarizer according to the above (1) or (2), which further satisfies the following condition (e):

(e) the width Hm1 (the length in the depth direction from the top face of the ridge toward a groove) of the fine metallic wire covering the first side face of the ridge, the width Hm2 (the length in the depth direction from the top face of the ridge toward a groove) of the fine metallic wire covering the second side face of the ridge, and the height Hp of the ridge satisfy the following formulae (5-1) and (5-2):

$$Hm1 \geq 0.5 \times Hp \quad \ldots \quad (5\text{-}1),$$

and

$$Hm2 \geq 0.5 \times Hp \quad \ldots \quad (5\text{-}2).$$

(4) The wire grid polarizer according to any one of the above (1) to (3), which has a degree of polarization of at least 99.5%, a p-polarized light transmittance of at least 70% and a s-polarized light reflectivity of at least 80% for light incident from the surface on which the fine metallic wires are formed, and a s-polarized light reflectivity of less than 40% for light incident from a surface on which the fine metallic wires are not formed, in the visible light region.

(5) The wire grid polarizer according to any one of the above (1) to (4), wherein the fine metallic wires are made of silver, aluminum, chromium, magnesium, TiN, TaN or $TiSi_2$.

(6) A process for producing a wire grid polarizer comprising a light-transmitting substrate having a surface on which a plurality of ridges are formed in parallel with one another at a predetermined pitch (Pp), and fine metallic wires made of a metal or a metal compound, each covering three faces of each ridge of the light-transmitting substrate, that are a top face of the ridge and two side faces that are a first side face and a second side face extending in the longitudinal direction of the ridge; wherein the fine metallic wires are formed by a vapor deposition method satisfying the following conditions (A) to (F):

(A) the metal or the metal compound is vapor-deposited on the top face and the first side face of each ridge from a direction substantially perpendicular to the longitudinal direction of the ridge and at an angle of $\theta^R$ on the first side face side to the height direction of the ridge;

(B) the metal or the metal compound is vapor-deposited on the top face and the second side face of each ridge from a direction substantially perpendicular to the longitudinal direction of the ridge and at an angle of $\theta^L$ on the second side face side to the height direction of the ridge;

(C) a vapor deposition under the above condition (A) and a vapor deposition under the above condition (B) are carried out alternately so that the number of vapor depositions under the above condition (A) is m times (wherein m is at least 1) and the number of vapor depositions under the condition (B) is n times (wherein n is at least 1), and the total (m+n) becomes at least 3;

(D) the angle $\theta^R$ in the first vapor deposition in the m times of vapor depositions under the above condition (A) satisfies the following formula (I) and the angle $\theta^L$ in the first vapor deposition in the n times of vapor depositions under the above condition (B) satisfies the following formula (II):

$$15° \leq \theta^R \leq 45° \quad ... \quad (I),$$

and

$$15° \leq \theta^L \leq 45° \quad ... \quad (II);$$

(E) when the above m is at least 2, the angle $\theta^R_m$ in the m-th time and $\theta^R_{(m-1)}$ in the (m-1)-th time satisfy the following formula (III), and when the above n is at least 2, the angle $\theta^L_n$ in the n-th time and the angle $\theta^L_{(n-1)}$ in the (n-1)-th time satisfy the following formula (IV):

$$\theta^R_m \leq \theta^R_{(m-1)} \, ... \quad (III),$$

and

$$\theta^L_n \leq \theta^L_{(n-1)} \quad ... \quad (IV);$$

and

(F) in the first vapor deposition in the m times of vapor depositions under the above condition (A) and the first vapor deposition in the n times of vapor depositions under the above condition (B), the thickness Hm' of the fine metallic wires formed on the top faces of the ridges by each deposition is at most 10 nm.

(7) The process for producing a wire grid polarizer according to the above (6), wherein the wire-grid polarizer satisfies the following conditions (a) to (c):

(a) the thickness Dm1 of each fine metallic wire covering the first side faces of each ridge and the thickness Dm2 of the fine metallic wire covering the second side face of the ridge, satisfy the following formula (1-1) and the following formula (1-2), respectively:

$$0 \text{ nm} < Dm1 \leq 20 \text{ nm} \quad ... \quad (1\text{-}1),$$

and

$$0 \text{ nm} < Dm2 \leq 20 \text{ nm} \quad ... \quad (1\text{-}2);$$

(b) the thickness Hm of the fine metallic wires covering the top face of the ridge and the height Hp of the ridge satisfy the following formula (2):

$$40 \text{ nm} \leq Hm \leq 0.5 \times Hp \quad ... \quad (2); \text{ a}$$

and
(c) Dm1, Dm2, Pp and the width Dp of the ridge satisfy the following formula (3):

$$Dm1 + Dm2 \leq 0.4 \times (Pp - Dp) \quad ... \quad (3).$$

EFFECTS OF THE INVENTION

The wire grid polarizer of the present invention shows a high degree of polarization, a high p-polarized light transmittance and a high s-polarized light reflectivity for light incident from the front surface, and shows a low s-polarized light reflectivity for light incident from the rear surface, in the visible light region.

By the process for producing a wire grid polarizer of the present invention, it is possible to produce a wire grid polarizer which shows a high degree of polarization, a high p-polarized light transmittance and a high s-polarized light reflectivity for light incident from the front surface, and shows a low s-polarized light reflectivity for light incident from the rear surface, in the visible light region.

BRIEF DESCRIPTION OF THE DRAWINGS

Fig. 1 is a perspective view showing an example of the wire grid polarizer of the present invention.
Fig. 2 is a cross-sectional view showing another example of the wire grid polarizer of the present invention.

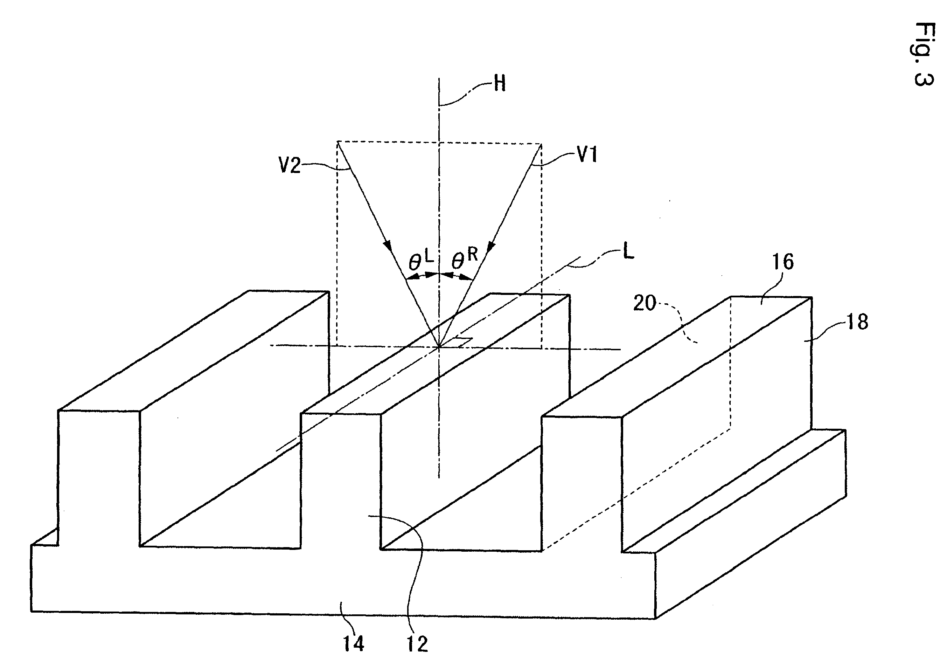

Fig. 3 is a perspective view showing an example of light-transmitting substrate.

MODE FOR CARRYING OUT THE INVENTION

<Wire grid polarizer>

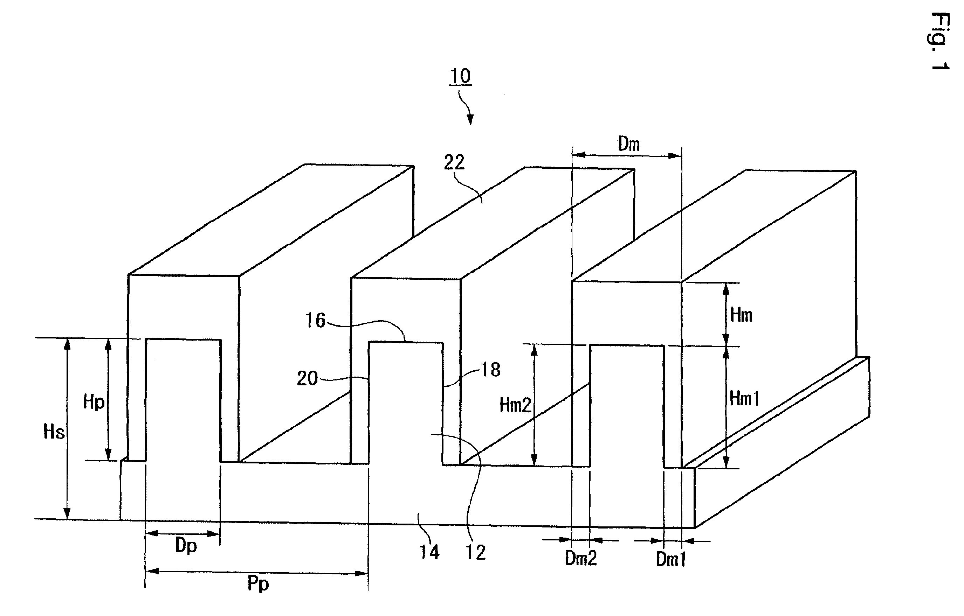

Fig. 1 is a perspective view showing an example of the wire grid polarizer of the present invention. A wire grid polarizer 10 has a light-transmitting substrate 14 having a surface on which a plurality of ridges 12 are formed so as to be parallel with one another at a predetermined pitch (Pp), fine metallic wires 22 made of metal or a metal compound and each covering three faces of each ridge 12, that are a top face and two side faces that are a first side face 18 and a second side face 20 extending in the longitudinal direction of the ridge 12.

Pp is the sum of the width Dp of the ridge 12 and the width of a groove formed between the ridges 12. Pp is preferably at most 300 nm, more preferably from 50 to 200 nm. When Pp is at most 300 nm, the wire grid polarizer 10 shows a further high s-polarized light reflectivity for light incident from its front surface, and even in a short wavelength region of about 400 nm, the wire grid polarizer 10 shows a further high degree of polarization for light incident from its front surface. Further, coloring phenomena due to diffraction can be suppressed.

Further, Pp is particularly preferably from 100 to200 nm, from the viewpoint of easiness of forming the fine metallic wires 22 by vapor deposition.

The ratio between Dp and Pp, that is (Dp/Pp), is preferably from 0.1 to 0.55, more preferably from 0.25 to 0.45.

When Dp/Pp is at least 0.1, the wire grid polarizer 10 shows a further high degree of polarization for light incident from its front surface. When Dp/Pp is at most 0.55, coloring of transmission light due to interference can be suppressed.

Further, from the viewpoint of easiness of forming the fine metallic wires 22 by vapor deposition, Dp is particularly preferably from 30 to 80 nm, more preferably from 40 to 70 nm.

The height Hp of the ridge 12 is preferably from 50 to 500 nm, more preferably from 80 to 300 nm. When Hp is at most 50 nm, selective deposition of the fine metallic wires 22 on a surface of the ridge 12 becomes easy. When Hp is at most 500 nm, incident angle-dependence of degree of polarization of wire grid polarizer 10 becomes small. Further, from the viewpoint of easiness of forming the fine metallic wires 22 by vapor deposition, Hp is particularly preferably from 100 to 270 nm.

(Light-transmitting substrate)

The light-transmitting substrate 14 is a substrate having a light-transmittance in a wavelength region to be used for the wire grid polarizer 10. The light transmittance means a property of transmitting light, and the wavelength region is specifically a region of from 400 nm to 800 nm. The thickness Hs of the light-transmitting substrate 14 is preferably from 0.5 to 1,000 $\mu$m, more preferably from 1 to 40 $\mu$m.

The material of the light-transmitting substrate 14 may, for example, be a photocurable resin, a thermoplastic resin or a glass, and it is preferably a photocurable resin or a thermoplastic resin from the viewpoint of capability of forming the ridges 12 by an imprint method to be described later, and it is particularly preferably a photocurable resin from the viewpoint of capability of forming the ridges 12 by a photoimprint method and from the viewpoint of excellence in the thermal resistance and durability.

The photocurable resin is preferably a resin producible by photo-radical polymerization of photocurable composition from the viewpoint of productivity.

The photocurable composition is preferably one which shows a contact angle of at least 90° with water after the composition is photocured to form a cured film. When such a cured film has a contact angle of at least 90° with water, at a time of forming the ridges 12 by a photoimprint method, it is possible to improve a releasing property from a mold, and to achieve a transferring with high accuracy, and to sufficiently exhibit the objective performance of the wire grid polarizer 10 to be obtained.

(Fine metallic wires)

Each fine metallic wire 22 is formed to cover three faces that are a top face 16, a first side face 18 and a second side face 20 of each ridge 12, and little fine metallic wire 22 is formed on a bottom face of a groove between the ridges 12, whereby fine metallic wires 22 are not continuous at the bottom face of the groove between the ridges 12. However, the fine metallic wire 22 formed on the first side face 18 or the second side face 20 may contact with the bottom face of the groove.

The fine metallic wires 22 are formed so as to satisfy the following conditions (a) to (c).

(a) The thickness Dm1 of each fine metallic wire covering the first side face of each ridge and the thickness Dm2 of the fine metallic wire covering the second side face of the ridge, satisfy the following formula (1-1) and the following formula (1-2), respectively:

$$0 \text{ nm} < Dm1 \leq 20 \text{ nm} \quad \ldots \quad (1\text{-}1),$$

and

$$0 \text{ nm} < Dm2 \leq 20 \text{ nm} \quad \ldots \quad (1\text{-}2).$$

(b) The thickness Hm of the fine metallic wire covering the top face of the ridge and the height Hp of the ridge satisfy the following formula (2):

$$40 \text{ nm} \leq Hm \leq 0.5 \times Hp \quad \ldots \quad (2).$$

(c) Dm1, Dm2, Pp of the ridges 12 and the width Dp of each ridge 12 satisfy the following formula (3):

$$Dm1+Dm2 \leq 0.4 \times (Pp-Dp) \qquad (3).$$

Condition (a):

Dm1 is the thickness of a fine metallic wire 22 covering the first side face 18 of a ridge 12 at a height of the top face 16 of the ridge 12. Dm2 is the thickness of the fine metallic wire 22 covering the second side face 20 of the ridge 12 at a height of the top face 16 of the ridge 12.

When Dm1 and Dm2 are each at most 20 nm, the space of a groove between the ridges 12 becomes wide, and the wire-grid polarizer shows a high p-polarized light transmittance for light incident from the front surface. Further, when Dm1 and Dm2 are each at most 20 nm, the fine metallic wire 22 covering the first side face 18 and the fine metallic wire 22 covering the second side face 20 absorb most of s-polarized light incident from the rear surface of the wire grid polarizer 10, the wire grid polarizer 10 shows a low s-polarized light reflectivity for light incident from the rear surface. Dm1 and Dm2 are each preferably at most 15 nm, more preferably at most 10 nm.

When Dm1 and Dm2 are each more than 0 nm, the fine metallic wire 22 covering the first side face 18 and the fine metallic wire 22 covering the second side face 20 absorb s-polarized light incident from the rear surface of the wire grid polarizer 10, and accordingly, the wire grid polarizer 10 shows a low s-polarized light reflectivity for light incident from the rear surface. Dm1 and Dm2 are each preferably at least 3 nm, more preferably at least 5 nm.

Condition (b):

When Hm is at least 40 nm, the wire grid polarizer 10 shows a high degree of polarization and a high s-polarized light reflectivity for light incident from its front surface. When Hm is at most a half of Hp, light-utilization efficiency improves. Hm is preferably at least 50 nm. Further, Hm is preferably at most 0.4 time Hp or at most 150 nm, more preferably at most 120 nm.

Condition (c):

When the total thickness of Dm1 and Dm2 is at most 40% of (Pp-Dp) that is the width of a groove between the ridges 12, there remains a space of at least 60% of the width of the groove between the ridges 12 remains, whereby the polarizer shows a high p-polarized light transmittance for light incident from its front surface. The total thickness of Dm1 and Dm2 is preferably at most 35% of (Pp-Dp), more preferably at most 30% of (Pp-Dp).

Condition (d):

The fine metallic wire 22 preferably satisfies the following condition (d).

(d) The maximum width Dm of the fine metallic wire covering the top face of the ridge, Pp and the width Dp of the ridge satisfy the following formula (4):

$$Dm-Dp \leq 0.4 \times (Pb-Dp) \quad ... \qquad (4).$$

When Dm-Dp is at most 40% of Pp-Dp (that is the width of a groove between ridges 12), a space of at least 60% is the width of a groove between the ridges 12 is not blocked by Dm, and the wire-grid polarizer shows a further high p-polarized light transmittance for light incident from the front surface.

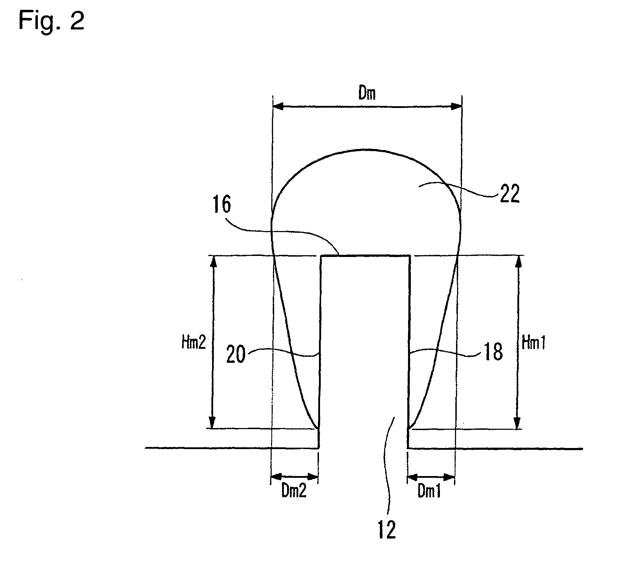

As shown in Fig. 2, under some vapor deposition conditions, the fine metallic wire 22 covering the top face 16 swells significantly in the lateral direction so as to project from the fine metallic wire 22 covering the first side face 18 or the fine metallic wire 22 covering the second side face 20. Namely, there is a case where Dm becomes larger than the total thickness of Dm1, Dm2 and Dp. Here, as shown in Fig. 1, when Dm is equal to the total thickness of Dm1, Dm2 and Dp, the condition (d) becomes the same as the condition (c).

Condition (e):

The fine metallic wire 22 preferably satisfies the following condition (e).

(e) The width Hm1 (the length in the depth direction from the top face of each ridge toward a groove) of the fine metallic wire covering the first side face of the ridge, the width Hm2 (the length in the depth direction from the top face of the ridge toward a groove) of the fine metallic wire covering the second side face of the ridge, and the height Hp of the ridge satisfy the following formula (5-1) and the following formula (5-2):

$$Hm1 \geq 0.5 \times Hp \quad \ldots \quad (5\text{-}1),$$

and

$$Hm2 \geq 0.5 \times Hp \quad \ldots \quad (5\text{-}2).$$

When Hm1 and Hm2 are each at least 50% of Hp, the areas of the fine metallic wire 22 covering the first side face 18 and the fine metallic wire 22 covering the second side face 20 become wide, whereby s-polarized light incident from the rear surface of the wire grid polarizer 10 is efficiently absorbed and the wire grid polarizer 10 shows a further low s-polarized light reflectivity for light incident from the rear surface. Hm1 and Hm2 are each preferably at least 60% of Hp, more preferably at least 65%. Further, Hm1 and Hm2 may be each 100% of Hp.

The dimensions of the ridge 12 and the fine metallic wire 22 of the present invention, are each obtained by measuring the maximum value of the dimension (here, Dm1 and Dm2 are values defined above) at each of five positions in a scanning electron microscopic image or a transmission electron microscopic image of a cross section of the wire grid polarizer 10, and averaging the values of the five positions.

The material of the fine metallic wire 22 may be a metal (silver, aluminum, chromium, magnesium, etc.) or a metal compound (TiN, TaN, $TiSi_2$, etc.). From the viewpoint of high reflectivity for visible light, low absorption for visible light and high electric conductance, it is preferably silver, aluminum, chromium or magnesium, particularly preferably aluminum.

(Protection layer)

Since the thickness of the fine metallic wires 22 is extremely small, even a slight scratch of the fine metallic wires 22 adversely affect the performance of the wire grid polarizer 10. Further, there is a case where the electric conductivity of the fine metallic wires 22 is decreased by rust, which deteriorates the performance of the wire grid polarizer 10 in some cases. Accordingly, in order to suppress scratch and rust of the fine metallic wires 22, the fine metallic wires 22 may be covered with a protection layer.

The protection layer may, for example, be a resin, a metal oxide or a glass. For example, when aluminum is employed as the metal, a surface of the aluminum is oxidized in the air to form an aluminum oxide. Such a metal oxide film functions as a protection layer of the fine metallic wires 22. In the present invention, when aluminum is oxidized to be an aluminum oxide, the total dimension of aluminum and the aluminum oxide is defined as the dimension of each fine metallic wire 22.

In order to decrease reflection of p-polarized light at an interface between the light-transmitting substrate 14 and the protection layer, the refractive index of the protection layer and the refractive index of the light-transmitting substrate preferably substantially equal to each other.

The protection layer is preferably one having a heat resistance and a visible light transmittance, and from the viewpoint of obtaining a high polarization separation ability in a wide wavelength range, the protection layer is more preferably one having a low refractive index.

Since the protection layer is present at the outermost surface of the wire grid polarizer 10, the protection layer is preferably one having a hardness of at least a pencil hardness of H and preferably has an antipollution property as well.

The protection layer or the light-transmitting substrate 14 may have an anti reflective structure on its surface in order to improve the utilization efficiency of light.

The s-polarized light reflectivity of the wire grid polarizer 10 for light incident from its front surface, is preferably as high as possible to improve the utilization efficiency of recycle light, and it is preferably at least 80%, more preferably at least 82%. The s-polarized light reflectivity of the wire grid polarizer 10 for light incident from its rear surface is preferably as low as possible to improve the contrast, and it is preferably less than 40%, more preferably less than 30%.

The p-polarized light transmittance of the wire grid polarizer 10 for light incident from its front surface, is preferably as high as possible to improve utilization efficiency of transmission light, and it is preferably at least 70%, more preferably at least 80%. The p-polarized light transmittance of the wire grid polarizer 10 for light incident from its rear surface, is preferably as high as possible to improve the utilization efficiency of transmission light, and it is preferably at least 70%, more preferably at least 80%.

Further, the degree of polarization of the wire grid polarizer 10 for light incident from its front surface was calculated by the following formula:

$$\text{Degree of polarization} = ((Tp-Ts)/(Tp+Ts)) \times 100$$

wherein Tp is the p-polarized light transmittance on the front surface, and Ts is a s-polarized light transmittance on the front surface. In order to improve the contrast, the degree of polarization for light incident from the front surface is preferably at least 99.5%, more preferably at least 99.7%.

The wire grid polarizer 10 described above has a light transmitting substrate 14 having a surface on which a plurality of ridges 12 are formed in parallel with one another at a predetermined pitch (Pp), and fine metallic wires 22 each covering three faces of such a ridge 14 of the light-transmitting substrate 14, that are a top face 16, a first side face 18 and a second side face 20, and the wire grid polarizer 10 satisfies the above conditions (a) to (c). Accordingly, the wire grid polarizer 10 shows a high degree of polarization, a high p-polarized light transmittance and a high s-polarized light reflectivity for light incident from its front surface, and shows a low s-polarized light reflectivity for light incident from its rear surface.

<Process for producing wire grid polarizer>

The wire grid polarizer 10 is produced by preparing a light-transmitting substrate 14 having a surface on which a plurality of ridges 12 are formed in parallel with one another at a predetermined pitch (Pp), and forming fine metallic wires 22 so as to each cover three faces of such a ridge 12 of the light-transmitting substrate 14, that are a top face 16, a first side face 18 and a second side face 20.

(Process for producing light-transmitting substrate)

The process for producing the light-transmitting substrate 14 may, for example, be an imprinting method (photoimprinting method or thermoimprinting method) or a lithography method. From the viewpoint of productivity in forming the ridges 12 and capability of producing a light-transmitting substrate 14 having a large area, the process is preferably an imprinting method, and from the viewpoint of high productivity in producing the ridges 12 and capability of transferring the shape of grooves of a mold with high precision, the process is particularly preferably a photoimprinting method.

The photoimprinting method is, for example, be a method of preparing a mold in which a plurality of grooves are formed in parallel one another at a predetermined pitch (Pp) by a combination of electron beam lithography and etching, transferring the shape of the grooves of the mold into a photocurable composition applied on a surface of an optional substratum, and photocuring the photocurable composition at the same time.

The preparation of light-transmitting substrate 14 by the photoimprinting method is specifically carried out through the following steps (i) to (v).

(i) A step of applying a photocurable composition on a surface of a substratum.
(ii) A step of pressing a mold in which a plurality of grooves are formed so as to be parallel with one another at a predetermined pitch, against the photocurable composition so that the grooves contact with the photocurable composition.
(iii) A step of radiating a radiation (UV rays, electron beams, etc.) to the mold in a state that the mold is pressed against the photocurable composition, to cure the photocurable composition to produce a light-transmitting substrate 14 having a plurality of ridges 12 corresponding to the grooves of the mold.
(iv) A step of separating the mold from the light-transmitting substrate 14.
(v) A step of separating the substratum from the light-transmitting substrate 14 as the case requires before or after formation of fine metallic wires 22 each covering three faces of each ridge 12 of the light-transmitting substrate 14.

The preparation of light-transmitting substrate 14 by a thermoimprinting method is specifically carried out through the following steps (i) to (iv).

(i) A step of forming on a surface of a substratum a layer of thermoplastic resin to which a pattern is transferred, or a step of producing a film of thermoplastic resin to which a pattern is transferred.
(ii) A step of pressing a mold in which a plurality of grooves are formed so as to be parallel with one another at a predetermined pitch, against the layer to be transferred or the film to be transferred, so that the grooves contact with the layer to be transferred or the film to be transferred, in a state that they are heated to be at least the glass transition temperature (Tg) or the melting point (Tm) of the thermoplastic resin, to prepare a light-transmitting substrate 14 having a plurality of ridges 12 corresponding to the grooves of the mold.

(iii) A step of cooling the light-transmitting substrate 14 to a temperature lower than Tg or Tm and separating the mold from the light-transmitting substrate 14.

(iv) A step of separating the substratum from the light-transmitting substrate 14 as the case requires before or after formation of fine metallic wires 22 each covering three faces of each ridge 12 of the light-transmitting substrate 14.

(Method for producing fine metallic wires)

The fine metallic wires 22 are formed by an oblique vapor deposition method of vapor-depositing a metal or a metal compound from an obliquely upward direction of a surface of the light-transmitting substrate 14 on which the ridges 12 are formed. The vapor deposition method may be a physical vapor deposition method such as a vacuum vapor deposition method, a sputtering method or an ion implanting method.

The fine metallic wires 22 are, specifically, formed by a vapor deposition method satisfying the following conditions (A) to (F).

(A) The metal or the metal compound is vapor-deposited on the top face and the first side face of each ridge from a direction substantially perpendicular to the longitudinal direction of the ridge and at an angle of $\theta^R$ in the first side face side to the height direction of the ridge.

(B) The metal or the metal compound is vapor-deposited on the top face and the second side face of each ridge from a direction substantially perpendicular to the longitudinal direction of the ridge and at an angle of $\theta^L$ in the second side face side to the height direction of the ridge.

(C) A vapor deposition under the above condition (A) and a vapor deposition under the above condition (B) are carried out alternately so that the number of vapor depositions under the above condition (A) is m times (wherein m is at least 1) and the number of vapor depositions under the condition (B) is n times (wherein n is at least 1), and the total (m+n) becomes at least 3.

(D) The angle $\theta^R$ in the first vapor deposition in the m times of vapor depositions under the above condition (A) satisfies the following formula (I) and the angle $\theta^L$ in the first vapor deposition in the n times of vapor depositions under the above condition (B) satisfies the following formula (II):

$$15° \leqq \theta^R \leqq 45° \qquad \dots \qquad (I),$$

and

$$15° \leqq \theta^L \leqq 45° \qquad \dots \qquad (II).$$

(E) When the above m is at least 2, the angle $\theta^R_m$ in the m-th time and $\theta^R_{(m-1)}$ in the (m-1)-th time satisfy the following formula (III), and when the above n is at least 2, the angle $\theta^L_n$ in the n-th time and the angle $\theta^L_{(n-1)}$ in the (n-1)-th time satisfy the following formula (IV):

$$\theta^R_m \leqq \theta^R_{(m-1)} \dots \qquad (III),$$

and

$$\theta^L_n \leqq \theta^L_{(n-1)} \qquad \dots \qquad (IV).$$

Condition (F):

The vacuum vapor deposition method preferably satisfies the following condition (F).

(F) In the first vapor deposition in the m times of vapor depositions under the above condition (A) and the first vapor deposition in the n times of vapor depositions under the above condition (B), the thickness Hm' of the fine metallic wires formed on the top faces of the ridges by each deposition is at most 10 nm.

Conditions (A) and (B):

When the conditions (A) and (B) are not satisfied, the fine metallic wires 22 each covering three faces of each ridge 12 of the light-transmitting substrate 14 cannot be formed. Here, in this specification, "substantially perpendicular" means that the angle between the direction L and the direction V1 (or the direction V2) is within a range of from 85 to 95˚.

Condition (C):

When the condition (C) is not satisfied, the thickness Hm of each fine metallic wire 22 covering the top face 16 of each ridge 12 becomes thin. Namely, in order to conduct a vapor deposition so that the thickness Dm1 of the fine metallic wire 22 covering a side face 22 of the ridge 12 and the thickness Dm2 of the fine metallic wire 22 covering a second side face 20 of a ridge 12 become a desired thickness by a single vapor deposition from a direction that is substantially perpendicular to the longitudinal direction of the ridge 12 and at an angle $\theta^R$ on the first side face 18 side to the height direction H of the ridge 12 (namely, on the first side face 18 side) and a single vapor deposition from a direction V2 that is a direction substantially perpendicular to the longitudinal direction L of the ridge 12 and at an angle $\theta^L$ on the second side face 20 side to the height direction H of the ridge 12 (namely, on the second side face 20 side), respectively, it is necessary to increase the angle $\theta^R$ and the angle $\theta^L$. As a result, the amount of the metal or the metal compound vapor-deposited on the top face 16 becomes small.

Further, by alternately carrying out the vapor deposition from the first side face 18 side and the vapor deposition from the second side face 20 side, it is possible to avoid uneven vapor deposition of the metal or the metal compound, and to make the thickness Dm1 of the fine metallic wire 22 covering the first side face 18 of the ridge 12 and the thickness Dm2 of the fine metallic wire 22 covering the second side face 20 of the ridge 12 become substantially the same.

Condition (D):

When the vapor deposition is carried out onto the ridges 12 having a pitch of at most the wavelength of light, the shape of each fine metallic wire 22 changes depending on the angle $\theta^R$ (or the angle $\theta^L$) of the vapor deposition. Accordingly, fine metallic wires 22 each having a proper shape cannot be formed under some angle $\theta^R$ (or angle $\theta^L$). If the angle $\theta^R$ at a first vapor deposition in the m times of the vapor depositions and the angle $\theta^L$ at a first vapor deposition in the n times of the vapor depositions, are less than 15˚, the metal or the metal compound is vapor-deposited on a bottom face of each groove between the ridges 12, and the fine metallic wires 22 are connected to each other, whereby it becomes impossible to transmit incident light. If the angle $\theta^R$ at the first vapor deposition in the m times of the vapor depositions and the angle $\theta^L$ at the first vapor deposition in the n times of the vapor depositions, exceed 45˚, the metal or the metal compound is unevenly vapor-deposited, and obliquely inclined fine metallic wires 22 are formed. Further, if the angle is set to be too large, a continuous film may be formed.

Further, it is preferred that the angle $\theta^R$ at a second vapor deposition in the m times of the vapor depositions under the above condition (A) satisfies the above formula (I), and that the angle $\theta^L$ at a second vapor deposition in the n times of the vapor depositions under the above condition (B) satisfies the above formula (II).

Condition (E):

If the condition (E) is not satisfied, when the thickness Dm1 of each fine metallic wire 22 covering the first side face 18 of each ridge 12 and the thickness Dm2 of the fine metallic wire 22 covering the second side face 20 of the ridge 12 are at most the predetermined thickness, the thickness Hm of the fine metallic wire 22 covering the top face 16 of the ridge 12 becomes too thin. Further, when the thickness Hm of the fine metallic wire 22 covering the top face 16 of the ridge 12 is at least 40 nm, the thickness Dm1 of the fine metallic wire 22 covering the first side face 18 of the ridge 12 and the thickness Dm2 of the fine metallic wire 22 covering the second side face 20 of the ridge 12 become too thick.

Further, when the above m is at least 2, it is preferred that the $\theta^R_m$ at m-th time and $\theta^R_{(m-1)}$ at (m-1)-th time satisfy the following formula (V), and when n is at least 2, it is preferred that $\theta^L_n$ at n-th time and $\theta^L_{(n-1)}$ at (n-1)-th time satisfy the following formula (VI).

$$\theta^R_m < \theta^R_{(m-1)} \qquad \dots \qquad (V)$$

and

$$\theta^L{}_n < \theta^L{}_{(n-1)} \qquad \ldots \qquad (VI).$$

When formula (V) and formula (VI) are satisfied, the vapor deposition is carried out while the angle $\theta^R$ (or an angle $\theta^L$) is gradually decreased according to increase of the thickness Hm of the fine metallic wires 22 each covering the top face 16 of each ridge 12, and accordingly, it is possible to prevent Dm1 and Dm2 from becoming too thick in relation to the increase of Hm.

Condition (F):

When the thickness Hm of each fine metallic wire 22 covering the top face 16 of each ridge 12 is made to thick in the initial vapor depositions, the thickness Dm1 of the fine metallic wire 22 covering the first side face 18 of the ridge 12 and the thickness Dm2 of the fine metallic wire 22 covering the second side face 20 of the ridge 12 may become too thick.
The angle $\theta^R$ and the angle $\theta^L$ can be adjusted, for example, by employing the following vapor deposition apparatus.
A vapor deposition apparatus wherein the tilt of a light-transmitting substrate 14 disposed so as to face to a vapor deposition source can be adjusted so that the vapor deposition source is relatively positioned on an extension line in a direction V1 substantially perpendicular to the longitudinal direction of the ridge 12 and at an angle of $\theta^R$ on the first side face 18 side to the height direction H of the ridge 12, or in the direction V2 substantially perpendicular to the longitudinal direction L of the ridge 12 and at an angle of $\theta^L$ on the second side face 20 side to the height direction H of the ridge 12.
The vapor deposition source may be a metal (such as silver, aluminum, chromium or magnesium) or a metal compound (such as TiN, TaN or TiSi$_2$), and from the viewpoint of high reflectivity for visible light, low absorption of visible light and high electric conductivity, it is preferably silver, aluminum, chromium, or magnesium, particularly preferably aluminum.
In the process for producing a wire grid polarizer 10 described above, since fine metallic wires 22 are formed by a vapor deposition method satisfying the above conditions (A) to (F), it is possible to produce fine metallic wires 22 satisfying the above conditions (a) to (c), and as a result, it is possible to obtain a wire grid polarizer 10 showing a high degree of polarization and a high p-polarized light transmittance and a high s-polarized light reflectivity for light incident from its front surface, and showing a low s-polarized light reflectivity for light incident from its rear surface.

EXAMPLES

Now, the present invention will be described in further detail with reference to Examples, but the present invention is not limited to these Examples.
Examples 1 to 7 are Examples of the present invention, and Examples 8 to 15 are Comparative Examples.

(Dimensions of fine metallic wire)

Dimensions of fine metallic wire are each obtained by measuring the maximum value (here, Dm1 and Dm2 are values defined above) of the dimension of fine metallic wire at each of five positions in a transmission type electron microscopic image of a cross section of a wire grid polarizer, and averaging the values of the five positions.

(Transmittance)

A solid state laser beam having a wavelength of 405 nm and a semiconductor laser beam having a wavelength of 635 nm are incident from a front surface (a surface on which fine metallic wires are formed) or a rear surface (a surface on which no metallic wires are formed) of a wire grid polarizer, so as to perpendicular to the front surface or the rear surface of the wire grid polarizer, to measure the p-polarized light transmittance and the s-polarized light transmittance.
An example which showed a p-polarized light transmittance of at least 70% from the front surface is designated as ○, and an example which showed that of less than 70% is designated as ×.
An example which showed a p-polarized light transmittance of at least 70% from the rear surface is designated as ○, and an example which showed that of less than 70% is designated as ×.

(Reflectivity)

A solid state laser beam having a wavelength of 405 nm and a semiconductor laser beam having a wavelength of 635 nm are incident from a front surface or a rear surface (a surface on which no fine metallic wires are formed) of a wire grid polarizer so as to be at an angle of 5˚ to the front surface or the rear surface of the wire grid polarizer, to measure the s-polarized light reflectivity.

An example which showed a s-polarized light reflectivity of at least 80% from the front surface is designated as ○, and a sample showing that of less than 80% is designated as ×.

An example which showed a s-polarized light reflectivity of at least 40% from the rear surface is designated as ○, and a sample showing that of at least 40% is designated as ×.

(Degree of polarization)

The degree of polarization of the wire grid polarizer for light incident from its front surface is calculated by the following formula.

$$\text{Degree of polarization}=((Tp-Ts)/(Tp+Ts))\times 100$$

wherein Tp is the p-polarized light transmittance from the front surface, and Ts is the s-polarized light transmittance from the front surface.

An example which showed a degree of polarization of at least 99.5% is designated as ○, and a sample showing a degree of polarization of less than 99.5% is designated as ×.

(Angle dependence)

The degree of polarization of light when the light is incident into the front surface of the wire grid polarizer from a direction perpendicular to the longitudinal direction of a ridge and at an angle of 45˚ on a first side face side to the height direction H of the ridge, and the degree of polarization of light when the light is incident from the front surface of the wire grid polarizer from a direction perpendicular to the longitudinal direction L of a ridge and at an angle of 45˚ on the second side face side to the height direction of the ridge, were measured, and a value of (higher degree of polarization) /(lower degree of polarization) was obtained. An example having the value of at most 1.5 is designates as ○, and a sample having the value of more than 1.5 is designated as ×.

(Preparation of photocurable composition)

60 g of a monomer 1 (NK ester A-DPH, dipentaerythritol hexaacrylate, manufactured by Shin-Nakamura Chemical Co., Ltd.),

40 g of a monomer 2 (NK ester A-NPG, neopentyl glycol diacrylate, manufactured by Shin-Nakamura Chemical Co., Ltd.),

4.0 g of a photopolymerization initiator (IRGACURE 907, manufactured by Ciba Specialty Chemicals),

0.1 g of fluorosurfactant (cooligomer of fluoroacrylate ($CH_2$=CHCOO$(CH_2)_2(CF_2)_8$F) and butyl acrylate, manufactured by Asahi Glass Company, Limited, fluorine content: about 30 mass%, mass-average molecular weight: about 3,000),

1.0 g of a polymerization inhibitor (Q1301, manufactured by Wako Pure Chemical Industries, Ltd.) and

65.0 g of cyclohexane, were put in a four-port flask of 1,000 mL to which a stirrer and a cooling pipe are attached.

In a state that inside of the flask was set at room temperature while light is shielded, stirring was carried out for 1 hour to homogenize the content. Subsequently, while the content of the flask was being stirred, 100 g of a colloidal silica (solid state content: 30 g) was gradually added, and the content of the flask was stirred for 1 hour in a state that inside of the flask was set to room temperature while light is shielded, to homogenize the content. Subsequently, 340 g of cyclohexanone was added, and the content of the flask was stirred for 1 hour in a state that inside of the flask was set to room temperature while light is shielded, to obtain a solution of photocurable composition 1.

EXAMPLE 1

(Preparation of light-transmitting substrate)

The photocurable composition 1 was applied on a surface of a high-transmitting polyethylene terephthalate (PET) film (Teijin Tetron 03, manufactured by Teijin DuPont, 100 mm × 100 mm) having a thickness of 100 $\mu$m, by a spin coating method, to form a coating film of the photocurable composition 1 having a thickness of 1 $\mu$m.

A quartz mold (50 mm × 50 mm, groove pitch Pp: 150 nm, groove width Dp: 50 nm, groove depth Hp: 200 nm, groove length: 50 mm, cross-sectional shape of groove: rectangular) having a plurality of grooves formed so as to be parallel with one another at a predetermined pitch, was pressed against the coating film of the photocurable composition 1 at 25°C with 0.5 MPa (gauge pressure) so that the grooves contact with the coating film of the photocurable composition 1.

While the above state was maintained, light of a high pressure mercury lamp (frequency: 1.5 kHz to 2.0 kHz, peak wavelengths: 255 nm, 315 nm and 365 nm, radiation energy at 365 nm: 1,000 mJ) was radiated to the photocurable composition 1 for 15 seconds from the quartz mold side, to cure the photocurable composition 1 to produce a light-transmitting substrate 1 (ridge pitch Pp: 150 nm, ridge width Dp: 50 nm, ridge height: Hp: 200 nm) having a plurality of ridges corresponding to the grooves of the quartz mold. The quarts mold was slowly separated from the light-transmitting substrate.

(Formation of fine metallic wires)

Employing a vacuum vapor deposition apparatus (SEC-16CM, manufactured by Showa Shinku Co., Ltd.) wherein the tilt of a light-transmitting substrate facing to a vapor deposition source can be adjusted, aluminum was vapor-deposited on the ridges of the light-transmitting substrate by an oblique vapor deposition method, to form fine metallic wires, thereby to obtain a wire grid polarizer having a rear surface on which a PET film was pasted. At this time, a vapor deposition from a direction V1 (that is, from a first side face side) substantially perpendicular to the longitudinal direction L of the ridges and at an angle $\theta^R$ in the first side face side to the height direction H of the ridges, and a vapor deposition from a direction V2 (that is, from the second side face side) substantially perpendicular to the longitudinal direction L of the ridges and at an angle $\theta^L$ in the second side face side to the height direction H of the ridges, are carried out alternately so that the angle $\theta^R$ or the angle $\theta^L$ at each vapor deposition and the thickness Hm' of the fine metallic wires formed by each vapor deposition were as shown in Table 1. Here, Hm' was measured by a film thickness monitor employing a quartz oscillator as a film thickness sensor.

With respect to a wire grid polarizer obtained, dimensions of the fine metallic wires were measured. Table 2 shows the results.

Further, with respect to the wire grid polarizer obtained, the transmittance, the reflectivity, the degree of polarization and the angle dependence were measured. Table 3 shows the results.

EXAMPLE 2

(Preparation of light-transmitting substrate)

A light-transmitting substrate (ridge pitch Pp: 120 nm, ridge width Dp: 40 nm, ridge height: Hp: 120 nm) having a plurality of ridges corresponding to grooves of a nickel mold, was prepared in the same manner as Example 1 except that the nickel mold (100 mm × 100 mm, groove pitch Pp: 120 nm, groove width Dp: 40 nm, groove depth Hp: 120 nm, groove length: 80 mm, cross-sectional shape of groove: rectangular) having a plurality of grooves formed so as to be parallel with one another at a predetermined pitch was employed as a mold.

(Formation of fine metallic wires)

A wire grid polarizer was obtained in the same manner as Example 1 except that the angle $\theta^R$ (or the angle $\theta^L$) at each vapor deposition and the thickness Hm' of the fine metallic wires formed by each vapor deposition were as shown in Table 1.

With respect to the wire grid polarizer obtained, dimensions of the fine metallic wires were measured. Table 2 shows the results.

Further, with respect to the wire grid polarizer obtained, the transmittance, the reflectivity, the degree of polarization and the angle dependence were measured. Table 3 shows the results.

EXAMPLE 3

(Preparation of light-transmitting substrate)

A light-transmitting substrate (ridge pitch Pp: 200 nm, ridge width Dp: 80 nm, ridge height: Hp: 200 nm) having a plurality of ridges corresponding to grooves of a nickel mold, was prepared in the same manner as Example 1 except that the nickel mold (100 mm × 100 mm, groove pitch Pp: 200 nm, groove width Dp: 80 nm, groove depth Hp: 200 nm, groove length: 50 mm, cross-sectional shape of groove: rectangular) having a plurality of grooves formed so as to be parallel with one another at a predetermined pitch was employed as a mold.

(Formation of fine metallic wires)

A wire grid polarizer was obtained in the same manner as Example 1 except that the angle $\theta^R$ (or the angle $\theta^L$) at each vapor deposition and the thickness Hm' of the fine metallic wires formed by each vapor deposition were as shown in Table 1.
With respect to the wire grid polarizer obtained, dimensions of the fine metallic wires were measured. Table 2 shows the results.
Further, with respect to the wire grid polarizer obtained, the transmittance, the reflectivity, the degree of polarization and the angle dependence were measured. Table 3 shows the results.

EXAMPLES 4 to 14

After a light-transmitting substrate was prepared in the same manner as Example 1, a wire grid polarizer was obtained in the same manner as Example 1 except that the number of vapor depositions, the angle $\theta^R$ (or the angle $\theta^L$) at each vapor deposition and the thickness Hm' of the fine metallic wires formed by each vapor deposition were as shown in Table 1.
With respect to the wire grid polarizer obtained, dimensions of the fine metallic wires were measured. Table 2 shows the results.
Further, with respect to the wire grid polarizer obtained, the transmittance, the reflectivity, the degree of polarization and the angle dependence were measured. Table 3 shows the results.

EXAMPLE 15

(Preparation of light-transmitting substrate)

A light-transmitting substrate (ridge pitch Pp: 200 nm, ridge width Dp: 60 nm, ridge height: Hp: 100 nm) having a plurality of ridges corresponding to grooves of a silicon mold, was prepared in the same manner as Example 1 except that the silicon mold (20 mm × 20 mm, groove pitch Pp: 200 nm, groove width Dp: 60 nm, groove depth Hp: 100 nm, groove length: 10 mm, cross-sectional shape of groove: rectangular) having a plurality of grooves formed so as to be parallel with one another at a predetermined pitch was employed as a mold.

(Formation of fine metallic wires)

A wire grid polarizer was obtained in the same manner as Example 1 except that the angle $\theta^R$ (or the angle $\theta^L$) at each vapor deposition and the thickness Hm' of the fine metallic wires formed by each vapor deposition were as shown in Table 1.
With respect to the wire grid polarizer obtained, dimensions of the fine metallic wires were measured. Table 2 shows the results.
Further, with respect to the wire grid polarizer obtained, the transmittance, the reflectivity, the degree of polarization and the angle dependence were measured. Table 3 shows the results.

TABLE 1

| | Number of vapor deposition | 1 (m=1) | 2 (n=1) | 3 (m=2) | 4 (n=2) | 5 (m=3) |
|---|---|---|---|---|---|---|
| | Direction of vapor deposition | V1 | V2 | V1 | V2 | V1 |
| Example 1 | Angle (°) Thickness | 30 | 30 | 25 | 25 | 20 |
| | (nm) | 6 | 6 | 12 | 12 | 14 |
| Example 2 | Angle (°) | 20 | 20 | 15 | 15 | 10 |
| | Thickness nm | 6 | 8 | 11 | 15 | 15 |
| Example 3 | Angle (°) | 45 | 45 | 40 | 40 | 35 |
| | Thickness (nm) | 8 | 8 | 15 | 15 | 9 |
| Example 4 | Angle (°) Thickness | 35 | 35 | 30 | 30 | |
| | (nm) | 8 | 8 | 15 | 14 | |
| Example 5 | Angle (°) | 30 | 30 | 25 | 20 | 20 |
| | Thickness (nm) | 6 | 6 | 15 | 15 | 8 |
| Example 6 | Angle (°) | 30 | 30 | 25 | 25 | |
| | Thickness (nm) | 10 | 10 | 15 | 20 | |
| Example 7 | Angle (°) | 30 | 30 | 25 | 20 | |
| | Thickness (nm) | 7 | 6 | 18 | 19 | |
| Example 8 | Angle (°) | 50 | 50 | | | |
| | Thickness (nm) | 15 | 10 | | | |
| Example 9 | Angle (°) | 85 | 85 | 40 | | |
| | Thickness (nm) | 15 | 15 | 15 | | |
| Example 10 | Angle (°) | 20 | 20 | 40 | 45 | |
| | Thickness (nm) | 30 | 30 | 50 | 60 | |
| Example 11 | Angle (°) | 5 | 5 | 20 | 25 | |
| | Thickness (nm) | 10 | 10 | 15 | 20 | |
| Example 12 | Angle (°) | 80 | 70 | 15 | 15 | 15 |
| | Thickness (nm) | 5 | 5 | 15 | 20 | 5 |
| Example 13 | Angle (°) | 40 | 40 | 35 | | |
| | Thickness (nm) | 15 | 20 | 15 | | |
| Example 14 | Angle (°) | 35 | 35 | | | |
| | Thickness (nm) | 10 | 25 | | | |
| Example 15 | Angle (°) | 60 | 60 | | | |
| | Thickness (nm) | 18 | 17 | | | |

TABLE 2

| | Dm (nm) | Dm1 (nm) | Dm2 (nm) | Hm (nm) | Hm1 (nm) | Hm2 (nm) | Pp (nm) | Dp (nm) | Hp (nm) | Hm/Hp | Dm1+Dm2 | 0.4×(Pp-Dp) |
|---|---|---|---|---|---|---|---|---|---|---|---|---|
| Example 1 | 74 | 12 | 12 | 50 | 200 | 200 | 150 | 50 | 200 | 0.25 | 24 | 40 |
| Example 2 | 52 | 6 | 6 | 55 | 120 | 120 | 120 | 40 | 120 | 0.46 | 12 | 32 |
| Example 3 | 112 | 16 | 16 | 55 | 200 | 200 | 200 | 80 | 200 | 0.275 | 32 | 48 |
| Example 4 | 80 | 15 | 15 | 45 | 150 | 150 | 150 | 50 | 200 | 0.225 | 30 | 40 |
| Example 5 | 78 | 14 | 14 | 50 | 200 | 180 | 150 | 50 | 200 | 0.25 | 28 | 40 |
| Example 6 | 84 | 17 | 17 | 55 | 180 | 180 | 150 | 50 | 200 | 0.275 | 34 | 40 |
| Example 7 | 82 | 16 | 16 | 50 | 200 | 180 | 150 | 50 | 200 | 0.25 | 32 | 40 |
| Example 8 | 92 | 21 | 21 | 25 | 200 | 200 | 150 | 50 | 200 | 0.125 | 42 | 40 |
| Example 9 | - | - | - | - | - | - | 150 | 50 | 200 | - | - | 40 |
| Example 10 | 114 | 32 | 32 | 170 | 180 | 190 | 150 | 50 | 200 | 0.85 | 64 | 40 |
| Example 11 | 80 | 15 | 15 | 55 | 200 | 200 | 150 | 50 | 200 | 0.275 | 30 | 40 |
| Example 12 | 60 | 0 | 0 | 50 | 0 | 0 | 150 | 50 | 240 | 0.208 | 0 | 40 |
| Example 13 | 98 | 24 | 24 | 50 | 200 | 200 | 150 | 50 | 200 | 0.25 | 48 | 40 |
| Example 14 | 84 | 17 | 17 | 35 | 200 | 80 | 150 | 50 | 200 | 0.175 | 34 | 40 |
| Example 15 | 140 | 40 | 40 | 35 | 100 | 40 | 200 | 60 | 100 | 0.35 | 80 | 40 |

TABLE 3

| | p-polarized light transmittance | | s-polarized light reflectivity | | Front surface | |
| --- | --- | --- | --- | --- | --- | --- |
| | Front surface | Rear surface | Front surface | Rear surface | Degree of polarization | Angle dependence |
| Example 1 | ○ | ○ | ○ | ○ | ○ | ○ |
| Example 2 | ○ | ○ | ○ | ○ | ○ | ○ |
| Example 3 | ○ | ○ | ○ | ○ | ○ | ○ |
| Example 4 | ○ | ○ | ○ | ○ | ○ | ○ |
| Example 5 | ○ | ○ | ○ | ○ | ○ | ○ |
| Example 6 | ○ | ○ | ○ | ○ | ○ | ○ |
| Example 7 | ○ | ○ | ○ | ○ | ○ | ○ |
| Example 8 | ○ | ○ | × | × | × | ○ |
| Example 9 | - | - | - | - | - | - |
| Example 10 | × | × | ○ | × | ○ | ○ |
| Example 11 | × | × | ○ | × | - | × |
| Example 12 | ○ | ○ | ○ | × | ○ | ○ |
| Example 13 | × | × | ○ | × | ○ | ○ |
| Example 14 | ○ | ○ | × | × | × | × |
| Example 15 | ○ | ○ | × | × | × | × |

In Examples 1 to 7, a fine metallic wire satisfying the conditions (a) to (c) was formed on three faces of each ridge, and the polarizers showed a high degree of polarization, a high p-polarized light transmittance and a high s-polarized light reflectivity for light incident from a front surface, and showed a low s-polarized light reflectivity for light incident from the rear surface.

Example 8 is an example not satisfying the conditions (a), (b), (c), (C) and (D). The thickness Hm of fine metallic wires covering top faces of the ridges was insufficient. When the number of vapor depositions was twice, it was not possible to make Hm sufficiently thick without increasing the thickness Dm1 of a fine metallic wire covering the first side face of each ridge and the thickness Dm2 of the fine metallic wire covering the second side faces of the ridge. Accordingly, the degree of polarization and the s-polarized light reflectivity for light incident from the front surface were decreased, and the wire grid polarizer showed a high s-polarized light reflectivity for light incident from the rear surface.

Example 9 is an example not satisfying the condition (D). Since the vapor deposition angles at the first and the second vapor depositions are large and a continuous film of aluminum was formed on a top face of each ridge, evaluation was not carried out.

Fig. 10 is an example not satisfying the conditions (a), (b), (c), and (E). Since the angle at the third vapor deposition was larger than the angle at the first vapor deposition, the thickness of the fine metallic wires became entirely thick. Accordingly, the p-polarization light transmittance for light incident from the front surface was decreased, and the wire grid polarizer showed a high s-polarized light reflectivity for light incident from the rear surface.

Example 11 is an example not satisfying the conditions (D) and (E). Aluminum having a thickness of 15 nm was vapor-deposited even on bottom portions of the grooves between the ridges, to form a continuous film. Accordingly, p-polarized light incident from the front surface is not transmitted, and the wire grid polarizer showed a high s-polarized light reflectivity for light incident from the rear surface.

Example 12 is an example not satisfying the conditions (a) and (D). The fine metallic wires were formed only on top faces of the ridges. Accordingly, the wire grid polarizer showed a high s-polarized light reflectivity for light incident from the rear surface.

Example 13 is an example not satisfying the conditions (a), (c) and (F). Since the thickness Hm at each of the first and the second vapor depositions was larger than 10 nm, the thickness of the fine metallic wires became entirely thick. Accordingly, the p-polarized light transmittance for light incident from the front surface was decreased, and the wire grid polarizer showed a high s-polarized light reflectivity for light incident from its rear surface.

Example 14 is an example not satisfying the conditions (b) and (C). The thickness Hm of the fine metallic wires covering the top faces of the ridges was insufficient. Further, at least 60% of the second side face of each ridge was not covered with the fine metallic wire. Accordingly, the degree of polarization and the s-polarized light reflectivity for light incident from the front surface were decreased, and the angle dependence was large.

Example 15 is an example corresponding to Example 1 of Patent Document 2, which is an example not satisfying the conditions (a), (b), (c), (C) and (D). The thickness Hm of the fine metallic wire covering the top face of each ridge was insufficient, and on the other hand, the thickness Dm1 of the fine metallic wire covering the first side face of each ridge and the thickness Dm2 of the fine metallic wire covering the second side face of each ridge became too thick. Further, at least 60% of the second side face of each ridge was not covered with the fine metallic wire. Accordingly, the degree of polarization and the s-polarized light reflectivity for light incident from the front surface was decreased, and the wire grid polarizer showed a high s-polarized light reflectivity for light incident from its rear surface. Further, the angle dependence was large.

INDUSTRIAL APPLICABILITY

The wire grid polarizer of the present invention is useful as a polarizer for image display devices such as liquid crystal display devices, rear projection TVs or front projectors.

The entire disclosure of Japanese Patent Application No. 2008-097405 filed on April 3, 2008 including specification, claims, drawings and summary is incorporated herein by reference in its entirety.

EXPLANATION NUMERALS

10: Wire grid polarizer
12: Ridge
14: Light-transmitting substrate
16: Top face
18: First side face
20: Second side face
22: Fine metallic wire

**Claims**

1. A wire grid polarizer comprising a light-transmitting substrate having a surface on which a plurality of ridges are formed so as to be parallel with one another at a predetermined pitch (Pp), and fine metallic wires made of a metal or a metal compound, each covering three faces of each ridge of the light-transmitting substrate, that are a top face of the ridge and two side faces that are a first side face and a second side face, extending in the longitudinal direction of the ridge;

   wherein the wire grid polarizer satisfies the following conditions (a) to (c):

   (a) the thickness Dm1 of each fine metallic wire covering the first side face of each ridge and the thickness Dm2 of the fine metallic wire covering the second side face of the ridge, satisfy the following formula (1-1) and the following formula (1-2), respectively:

$$0 \text{ nm} < Dm1 \leq 20 \text{ nm} \quad ... \quad (1\text{-}1),$$

   and

$$0 \text{ nm} < Dm2 \leq 20 \text{ nm} \quad ... \quad (1\text{-}2);$$

   (b) the thickness Hm of the fine metallic wire covering the top face of the ridge and the height Hp of the ridge satisfy the following formula (2):

$$40\ nm \leq Hm \leq 0.5 \times Hp \quad \dots \quad (2);$$

and
(c) Dm1, Dm2, Pp and the width Dp of the ridge satisfy the following formula (3):

$$Dm1 + Dm2 \leq 0.4 \times (Pp - Dp) \quad (3).$$

2. The wire grid polarizer according to Claim 1, which further satisfies the following condition (d):

(d) the maximum width Dm of the fine metallic wire covering the top face of the ridge, Pp and the width Dp of the ridge satisfy the following formula (4):

$$Dm - Dp \leq 0.4 \times (Pb - Dp) \quad \dots \quad (4).$$

3. The wire grid polarizer according to Claim 1 or 2, which further satisfies the following condition (e):

(e) the width Hm1 (the length in the depth direction from the top face of the ridge toward a groove) of the fine metallic wire covering the first side face of the ridge, the width Hm2 (the length in the depth direction from the top face of the ridge toward a groove) of the fine metallic wire covering the second side face of the ridge, and the height Hp of the ridge satisfy the following formulae (5-1) and (5-2):

$$Hm1 \geq 0.5 \times Hp \quad \dots \quad (5\text{-}1),$$

and

$$Hm2 \geq 0.5 \times Hp \quad \dots \quad (5\text{-}2).$$

4. The wire grid polarizer according to any one of Claims 1 to 3, which has a degree of polarization of at least 99.5%, a p-polarized light transmittance of at least 70% and a s-polarized light reflectivity of at least 80% for light incident from the surface on which the fine metallic wires are formed, and a s-polarized light reflectivity of less than 40% for light incident from a surface on which the fine metallic wires are not formed, in the visible light region.

5. The wire grid polarizer according to any one of Claims 1 to 4, wherein the fine metallic wires are made of silver, aluminum, chromium, magnesium, TiN, TaN or $TiSi_2$.

6. A process for producing a wire grid polarizer comprising a light-transmitting substrate having a surface on which a plurality of ridges are formed in parallel with one another at a predetermined pitch (Pp), and fine metallic wires made of a metal or a metal compound, each covering three faces of each ridge of the light-transmitting substrate, that are a top face of the ridge and two side faces that are a first side face and a second side face extending in the longitudinal direction of the ridge; wherein the fine metallic wires are formed by a vapor deposition method satisfying the following conditions (A) to (F):

(A) the metal or the metal compound is vapor-deposited on the top face and the first side face of each ridge from a direction substantially perpendicular to the longitudinal direction of the ridge and at an angle of $\theta^R$ on the first side face side to the height direction of the ridge;
(B) the metal or the metal compound is vapor-deposited on the top face and the second side face of each ridge from a direction substantially perpendicular to the longitudinal direction of the ridge and at an angle of $\theta^L$ on the second side face side to the height direction of the ridge;
(C) a vapor deposition under the above condition (A) and a vapor deposition under the above condition (B) are carried out alternately so that the number of vapor depositions under the above condition (A) is m times (wherein m is at least 1) and the number of vapor depositions under the condition (B) is n times (wherein n is at least 1), and the total (m+n) becomes at least 3;

(D) the angle $\theta^R$ in the first vapor deposition in the m times of vapor depositions under the above condition (A) satisfies the following formula (I) and the angle $\theta^L$ in the first vapor deposition in the n times of vapor depositions under the above condition (B) satisfies the following formula (II):

$$15° \leq \theta^R \leq 45° \quad \ldots \quad (I),$$

and

$$15° \leq \theta^L \leq 45° \quad \ldots \quad (II);$$

(E) when the above m is at least 2, the angle $\theta^R_m$ in the m-th time and $\theta^R_{(m-1)}$ in the (m-1)-th time satisfy the following formula (III), and when the above n is at least 2, the angle $\theta^L_n$ in the n-th time and the angle $\theta^L_{(n-1)}$ in the (n-1)-th time satisfy the following formula (IV):

$$\theta^R_m \leq \theta^R_{(m-1)} \ldots \quad (III),$$

and

$$\theta^L_n \leq \theta^L_{(n-1)} \quad \ldots \quad (IV);$$

and
(F) in the first vapor deposition in the m times of vapor depositions under the above condition (A) and the first vapor deposition in the n times of vapor depositions under the above condition (B), the thickness Hm' of the fine metallic wires formed on the top faces of the ridges by each deposition is at most 10 nm.

7. The process for producing a wire grid polarizer according to Claim 6, wherein the wire-grid polarizer satisfies the following conditions (a) to (c):

(a) the thickness Dm1 of each fine metallic wire covering the first side faces of each ridge and the thickness Dm2 of the fine metallic wire covering the second side face of the ridge, satisfy the following formula (1-1) and the following formula (1-2), respectively:

$$0 \text{ nm} < Dm1 \leq 20 \text{ nm} \quad \ldots \quad (1\text{-}1),$$

and

$$0 \text{ nm} < Dm2 \leq 20 \text{ nm} \quad \ldots \quad (1\text{-}2);$$

(b) the thickness Hm of the fine metallic wires covering the top face of the ridge and the height Hp of the ridge satisfy the following formula (2):

$$40 \text{ nm} \leq Hm \leq 0.5 \times Hp \quad \ldots \quad (2);$$

and
(c) Dm1, Dm2, Pp and the width Dp of the ridge satisfy the following formula (3):

$$Dm1 + Dm2 \leq 0.4 \times (Pp - Dp) \quad (3).$$

Fig. 1

Fig. 2

Fig. 3

**INTERNATIONAL SEARCH REPORT**

| International application No. |
| --- |
| PCT/JP2009/056902 |

A. CLASSIFICATION OF SUBJECT MATTER
*G02B5/30*(2006.01)i, *G02F1/1335*(2006.01)i

According to International Patent Classification (IPC) or to both national classification and IPC

B. FIELDS SEARCHED

Minimum documentation searched (classification system followed by classification symbols)
G02B5/30, G02F1/1335

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)
JSTPlus(JDreamII)

C. DOCUMENTS CONSIDERED TO BE RELEVANT

| Category* | Citation of document, with indication, where appropriate, of the relevant passages | Relevant to claim No. |
| --- | --- | --- |
| P,X | WO 2008/084856 A1  (Toray Industries, Inc.), 17 July, 2008 (17.07.08), Full text; all drawings (particularly, Par. Nos. [0060] to [0061], [0073] to [0080], [0100] to [0112], [0179], [0232] to [0245], [0249] to [0262]; Figs. 6(c), (h), 7(c), (h), 9(i), 15(d), 17(e)) (Family: none) | 1-7 |
| X A | WO 2006/064693 A1  (Toray Industries, Inc.), 22 June, 2006 (22.06.06), Full text; all drawings (particularly, Claims 1 to 5; Par. Nos. [0091], [0095]; Fig. 3(d)) & US 2008/0129931 A1    & EP 1840603 A1 & KR 10-2007-0095878 A   & CN 101080656 A | 1-5 6-7 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search   30 June, 2009 (30.06.09) | Date of mailing of the international search report   14 July, 2009 (14.07.09) |
| --- | --- |
| Name and mailing address of the ISA/   Japanese Patent Office | Authorized officer |
| Facsimile No. | Telephone No. |

Form PCT/ISA/210 (second sheet) (April 2007)

**EP 2 261 704 A1**

INTERNATIONAL SEARCH REPORT

| | International application No. |
|---|---|
| | PCT/JP2009/056902 |

C (Continuation).　　DOCUMENTS CONSIDERED TO BE RELEVANT

| Category* | Citation of document, with indication, where appropriate, of the relevant passages | Relevant to claim No. |
|---|---|---|
| X<br>A | JP 2002-328222 A　(Nippon Sheet Glass Co.,<br>Ltd.),<br>15 November, 2002 (15.11.02),<br>Full text; all drawings<br>& US 2004/0239833 A1　　& US 2008/0018997 A1<br>& EP 1387190 A1　　　　& WO 2002/091044 A1<br>& TW 522261 B　　　　　& CA 2445750 A<br>& CN 1520524 A | 1-5<br>6-7 |
| A | JP 60-230102 A　(Nippon Bunko Kogyo Kabushiki<br>Kaisha),<br>15 November, 1985 (15.11.85),<br>Full text; all drawings<br>(Family: none) | 1-7 |
| A | JP 2001-330728 A　(JASCO Corp.),<br>30 November, 2001 (30.11.01),<br>Full text; all drawings<br>& US 2001/0053023 A1　　& EP 1158319 A2 | 1-7 |
| A | JP 2006-3447 A　(Sony Corp.),<br>05 January, 2006 (05.01.06),<br>Full text; all drawings<br>(Family: none) | 1-7 |

Form PCT/ISA/210 (continuation of second sheet) (April 2007)

27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005070456 A
- JP 2006003447 A
- JP 2008097405 A